# EUROPEAN PATENT APPLICATION

(11) **EP 2 418 131 A1**
(43) Date of publication of application: **15.02.2012**
(21) Application number: 11174052.8
(22) Date of filing: 14.07.2011
(51) Int. Cl.: B60S 9/12, B66C 23/80

(54) **Stabilizer, particularly for stationary motor vehicles**

(30) Priority: 13.08.2010 IT MI20101553
(71) Applicant: Gemelli, Roberto, 46020 Motteggiana (MN) (IT)
(72) Inventor: Gemelli, Roberto, 46020 Motteggiana (MN) (IT)
(74) Representative: Modiano, Micaela Nadia

(57) **Abstract**

A stabilizer (1), particularly for stationary motor vehicles, comprising a cylinder (3) provided at the top with a block (4) associated rotatably with a toothed pivot (5) that is connected monolithically to a plate (6) designed to be fixed to the structure of a motor vehicle, the block (4) being provided with connectors (4d, 4e) adapted to be connected to a hose for connection to a hydraulic control unit which is connected to a duct (4c) provided proximate to the block (4) provided with two passages toward the space delimited inside the cylinder (3) which are controlled by check valves (8, 9) with opposite passage directions.

## Description

The present invention relates to a stabilizer, particularly for stationary motor vehicles.

Many kinds of motor vehicles, in particular industrial vehicles or campers, are known which are provided with stabilizers which are moved from an inactive position, assumed during the motion of the vehicle, to an active position when the vehicle is stationary, in order to stabilize its balance.

These conventional devices, which are associated with the structure of the motor vehicle in symmetrically arranged positions, substantially comprise a foot which, in the active condition, is moved into contact with the ground, so as to create a plurality of resting points for the motor vehicle, and the embodiments proposed by the background art are the most disparate.

The aim of the present invention is to provide a stabilizer that has great constructive simplicity and maximum ease of actuation.

This aim and other objects which will become better apparent hereinafter, are achieved by a stabilizer, particularly for stationary motor vehicles, according to the invention, characterized in that it comprises the features disclosed in the appended claims.

Further characteristics and advantages of the present invention will become better apparent from the description of a preferred but not exclusive embodiment of the stabilizer according to the invention, illustrated by way of non-limiting example in the accompanying drawings, wherein:
Figure 1 is a perspective view of an application of the stabilizer according to the invention, shown in solid lines in the active position and in broken lines in the inactive position;

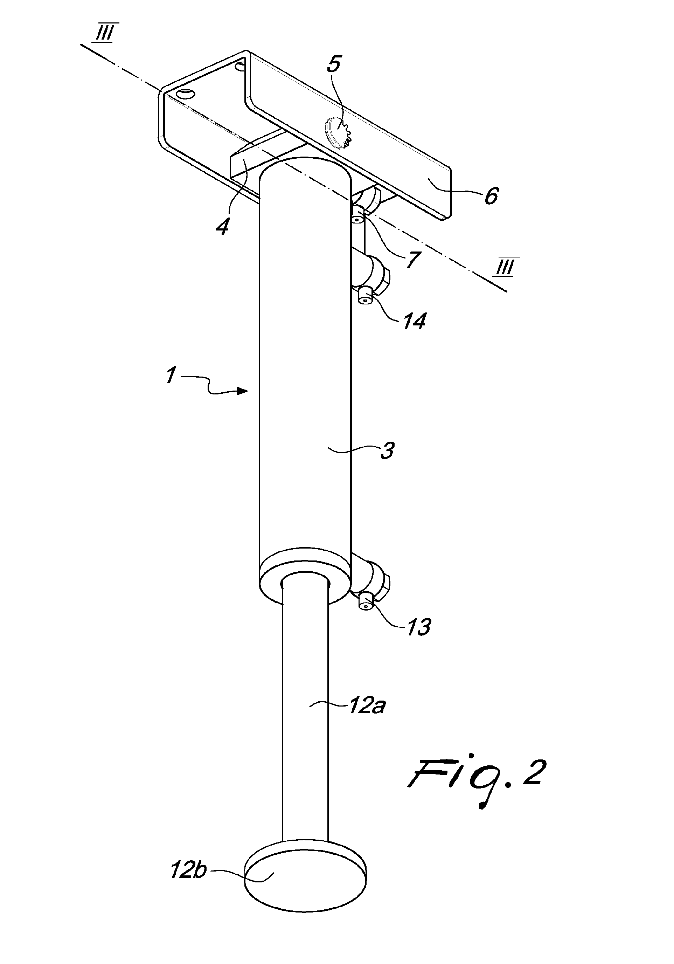

Figure 2 is a perspective view of the stabilizer in the active position;

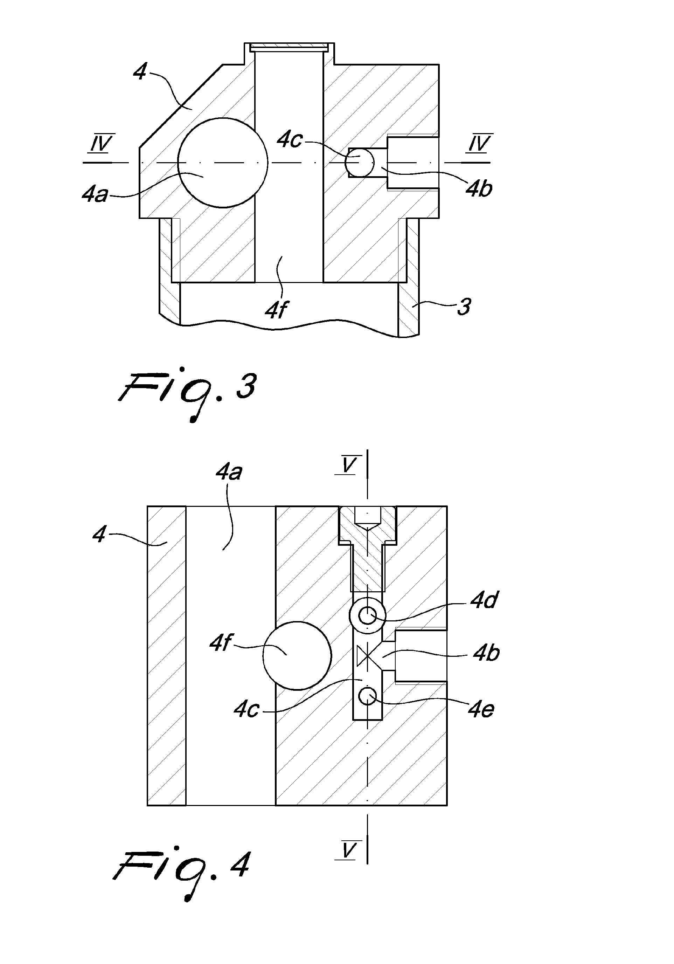

Figure 3 is a sectional view of the block alone, at the top of the cylinder of the stabilizer shown in Figure 2, taken along the line III-III;
Figure 4 is a sectional view of the block shown in Figure 3, taken along the line IV-IV;
Figure 5 is a sectional view of the block shown in Figure 4, taken along the line V-V;
Figure 6 is a detail perspective view of two elements joined by the stabilizer;
Figures 7, 8 and 9 are three sectional views, taken along a longitudinal plane, of the stabilizer according to the invention in three successive steps of its operation.

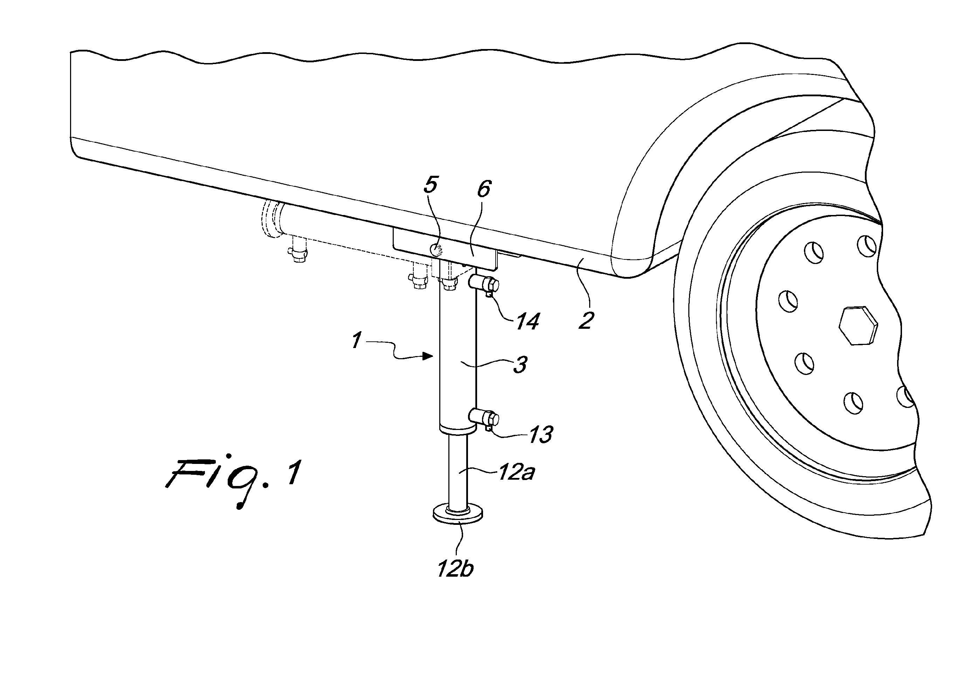

With reference to the figures, a stabilizer particularly for stationary motor vehicles, generally designated by the reference numeral 1, is shown associated with a motor vehicle 2, in Figure 1.

The stabilizer 1 comprises a cylinder 3 provided at the top with a block 4 associated rotatably with a toothed pivot 5 that is inserted in a seat 4a and is connected monolithically to a plate 6 designed to be fixed to the structure of the motor vehicle.

The block 4 is provided with a connector 7 designed to be associated with a hose for connection to a hydraulic control unit which is not shown in the figures and is connected, by way of a passage 4b, to a duct 4c provided with two passages 4d and 4e toward the space delimited inside the cylinder 3, which are controlled by check valves 8 and 9 with opposite passage directions which are appropriately set.

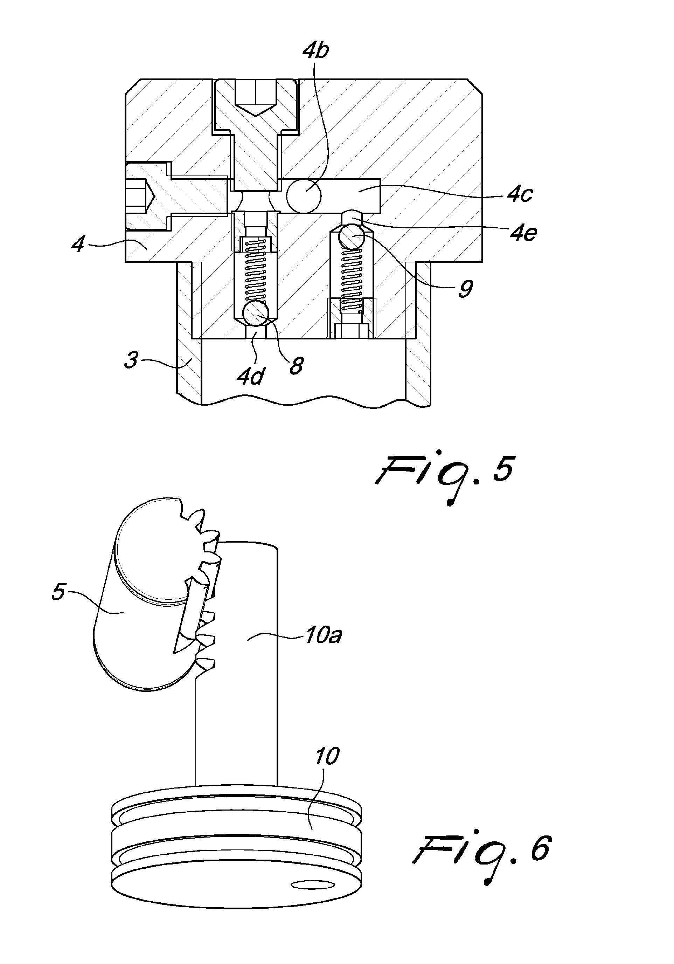

A first piston 10 is slidingly accommodated within the cylinder 3 and is provided, at the face directed toward the block 4, with a toothed stem 10a, which is designed to be inserted in a receptacle 4f provided in the block 4 to connect to the toothed pivot 5, shown in Figure 6.

The first piston further comprises a check valve 11, which is set appropriately with a passage direction away from the block 4.

A second piston 12 is also slidingly accommodated within the cylinder 3 and is provided with a stem 12a which comprises, at one end, a foot 12b for resting on the ground.

Finally, the cylinder 3 is provided with two connectors 13 and 14 which are located at the ends of the stroke of the second piston 12: the lower connector 13 is associated with a hose for direct connection to the hydraulic control unit, and the upper connector 14, provided with a check valve 15 which is set appropriately with a passage direction toward the outlet, is associated with a connecting hose, not shown in the figures, with the connector 16 and thus ultimately to the hydraulic control unit.

Operation of the stabilizer, particularly for stationary motor vehicles, is described hereafter.

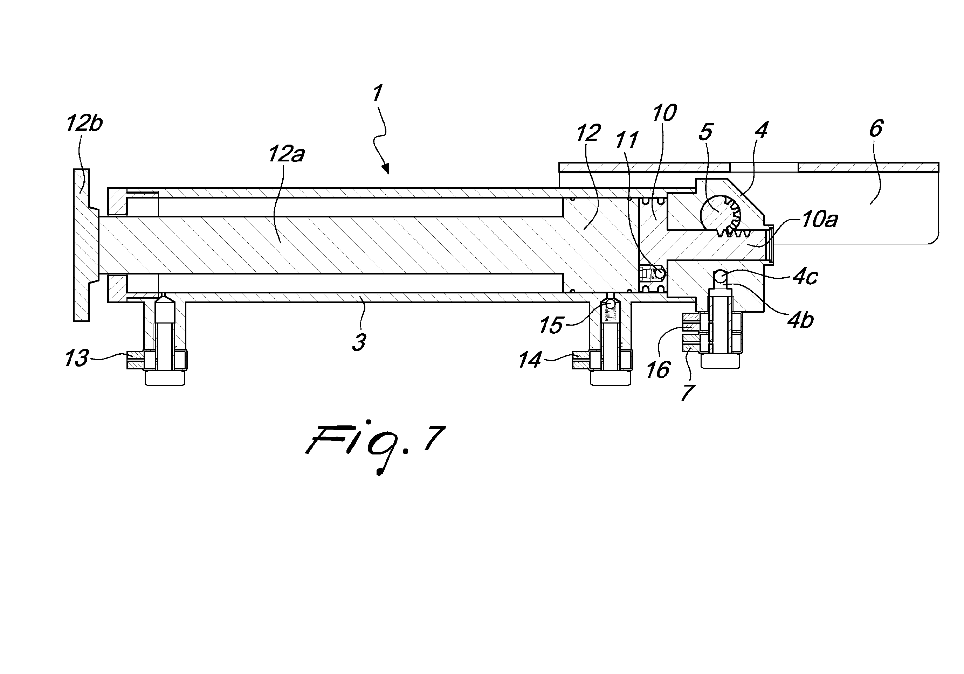

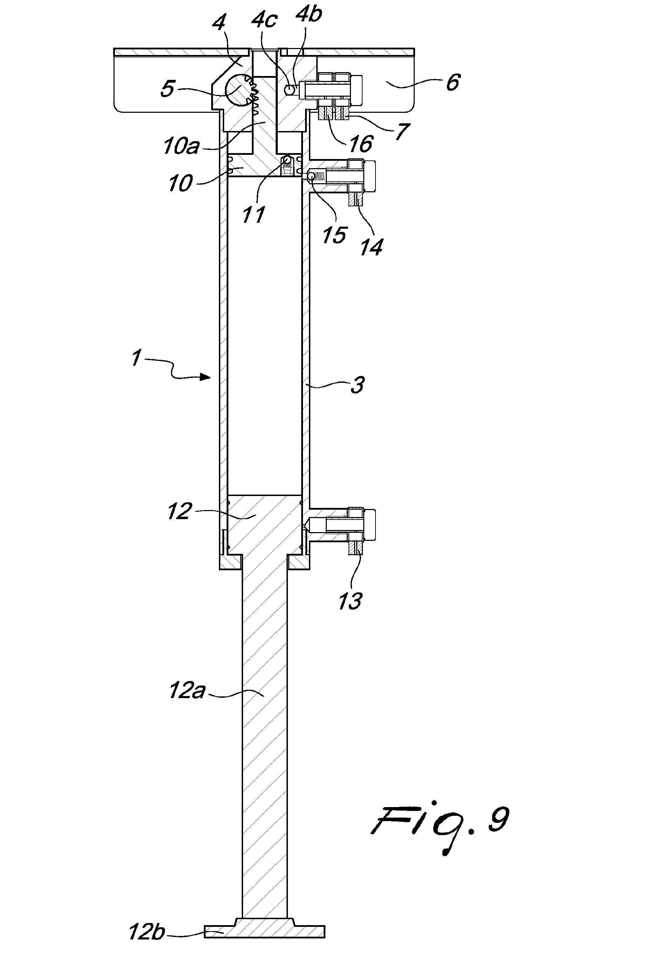

Starting from the inactive condition shown in broken lines in Figure 1 and particularly in Figure 7, when one wishes to move the device to the active situation shown in solid lines in Figure 1 and particularly in Figure 9, the inflow of oil from the hydraulic control unit is activated, with entry through the connector 7.

The oil thus passes into the duct 4c and from there arrives, by way of the passage 4e, when the pressure exceeds the set pressure of the check valve 9, in contact with the face of the piston 10, causing the descent of such piston.

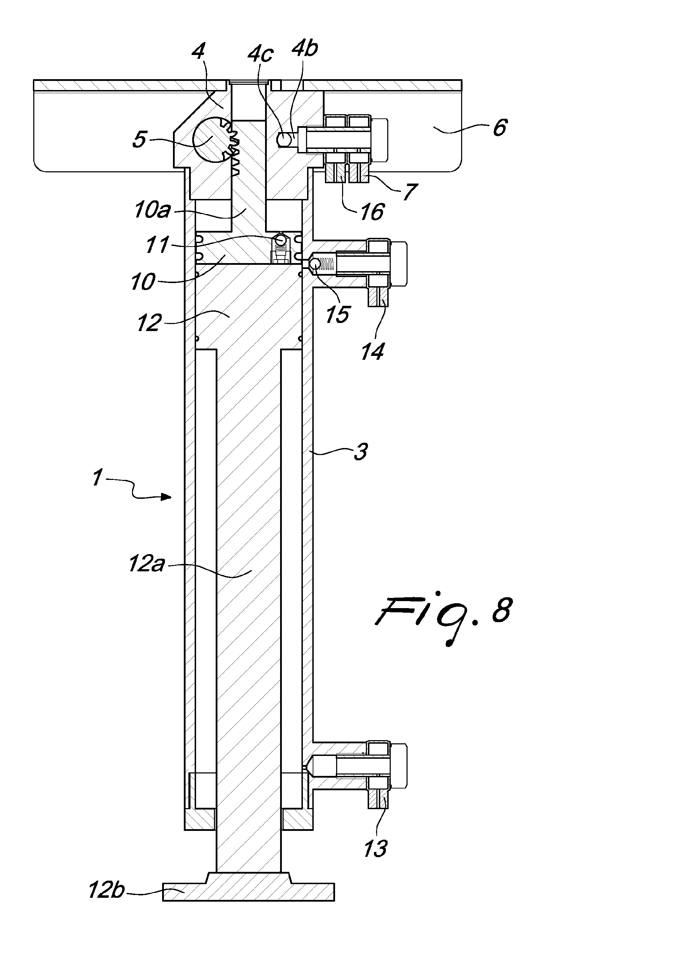

During this motion, contact has been provided between the teeth of the stem 10a and the teeth of the fixed pivot 5, up to the position of Figure 8, which is reached when the block 4 reaches the end of its stroke in contact with the plate 6.

At this point the pressure of the oil that continues to arrive exceeds the set pressure of the check valve 11, and so the oil makes contact with the piston 12, causing its descent to the active position of Figure 9; during this motion, the check valve 15 has remained closed, while the oil has been discharged through the connector 13, and it is important to note that the piston 10 has remained stationary, so as to ensure that the cylinder 3 remains in the position that it has reached.

Return from the active condition of Figure 9 to the inactive condition of Figure 7 is provided by sending oil into the connector 13, so as to lift the piston 12, which having substantially made contact with the piston 10 then continues its stroke, pushing in front of itself the piston 10, with consequent rotation of the cylinder 3 caused by the contact of the two sets of teeth of the stem 10 and of the pivot 5, until the desired inactive position is reached, and in this step the oil that is present above the piston 10 is discharged through the passage 4d.

The stabilizer, particularly for stationary motor vehicles, thus conceived is susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, may be any according to requirements and to the state of the art.

The disclosures in Italian Patent Application No. MI2010A001553 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A stabilizer (1), particularly for stationary motor vehicles, **characterized in that** it comprises a cylinder (3) provided at the top with a block (4) associated rotatably with a toothed pivot (5) that is connected monolithically to a plate (6) designed to be fixed to the structure of a motor vehicle, said block (4) being provided with connectors (4d, 4e) with a hose for connection to a hydraulic control unit which is connected to a duct (4c) provided proximate to said block (4) provided with two passages toward the space delimited inside the cylinder (3) which are controlled by check valves (8, 9) with opposite passage directions.

2. The stabilizer (1) according to claim 1, **characterized in that** a first piston (10) is slidable within said cylinder (3) and is provided, at the face directed toward said block (4), with a toothed stem (10a), which is complementary with respect to said toothed pivot (5) and comprises a check valve (11) which is set appropriately, with a passage direction for spacing of said block (4).

3. The stabilizer (1) according to one or more of the preceding claims, **characterized in that** it comprises a second piston (12) provided with a stem (12a) which comprises, at the end that protrudes from said cylinder (3), a foot (12b) for resting on the ground.

4. The stabilizer (1) according to one or more of the preceding claims, **characterized in that** said cylinder (3) is provided with connectors (13, 14) adapted to be associated to hoses for connection to the hydraulic control unit which are located at the ends of the stroke of said second piston (12), one of said connectors, specifically the one closest to said block (4), being provided with a check valve (15) which is set appropriately with a passage direction toward the outlet.
